# EUROPEAN PATENT SPECIFICATION

(11) **EP 2 889 178 B1**
(45) Date of publication and mention of the grant of the patent: **24.06.2020**
(21) Application number: 14200485.2
(22) Date of filing: 29.12.2014
(51) Int. Cl.: B60L 15/02, B60L 15/20, H02P 9/10, H02P 21/00, H02P 9/48, H02P 31/00, H02P 21/22

(54) **Synchronous generator control based on flux optimizer**
Synchrongeneratorsteuerung basierend auf Flussoptimierer
Commande de générateur synchrone sur la base d'optimiseur de flux

(30) Priority: 30.12.2013 US 201361921974 P
(43) Date of publication of application: 01.07.2015
(73) Proprietor: Rolls-Royce Corporation, Indianapolis, Indiana 46225-1103 (US)
(72) Inventor: Rancuret, Paul, Indianapolis, IN Indiana 46240 (US); Rajashekara, Kaushik, Murphy, TX Texas 75094 (US); Alt, John, Zionsville, IN Indiana 46077 (US)
(74) Representative: HGF Limited

(56) References cited:
- WO-A1-2013/060996
- FR-A1- 2 948 512
- US-A1- 2013 027 002
- US-B1- 6 359 421
- US-B2- 8 242 720

## Description

### FIELD OF TECHNOLOGY

An improved an integrated design and control of a synchronous generator is disclosed. More particularly, a method for providing flux regulation while minimizing losses due to electrical impedance is disclosed.

### BACKGROUND

Synchronous generators are utilized in a variety of industries and for a variety of applications. Their use in propulsion systems such as in aircraft commonly comprises providing power for engine starting as well as electrical power generation for systems operations. The electrical power demands of aircraft, as well as other transportation modes, are continually increasing as industries move to greater electronic control.

Traditional synchronous generators have a generator output that is controlled mainly by excitation voltage control. Traditional excitation voltage control may result in poor regulation of voltage and power factor in the presence of varying frequency and voltage. Modern operations require a well-regulated power converter irrespective of load variations, speed variations and operating conditions. Traditional excitation voltage control is not well suited to handle such variations. Additionally, the use of a fully controlled rectifier allows the controller to manipulate the vector of stator currents independently, as opposed to using passive rectification. The application of this vector control allows for finer tuning of the magnetic field, in such a way that can provide efficiency benefits.

Overcoming these concerns would be desirable, could improve generator efficiency, and could minimize the amount of losses due to electrical impedance.

WO2103060996A1 discloses a method for controlling a double excitation synchronous rotating electric machine and corresponding rotating electric machine. FR2948512A1 discloses a power supply device controlling method for e.g. motor vehicle, involves determining set point value of alternator excitation command according to rotation speed of rotor of alternator and electric power consumed by load.

According to the present disclosure, there is provided a control method for a synchronous generator system and a synchronous generator control system, as set forth in the appended claims.

### BRIEF DESCRIPTION OF THE DRAWINGS

While the claims are not limited to a specific illustration, an appreciation of the various aspects is best gained through a discussion of various examples thereof. Referring now to the drawings, exemplary illustrations are shown in detail. Although the drawings represent the illustrations, the drawings are not necessarily to scale and certain features may be exaggerated to better illustrate and explain an innovative aspect of an example. Further, the exemplary illustrations described herein are not intended to be exhaustive or otherwise limiting or restricted to the precise form and configuration shown in the drawings and disclosed in the following detailed description. Exemplary illustrations are described in detail by referring to the drawings as follows:
FIG. 1 is a schematic illustration of a synchronous generator control system, according to one example; and
FIG. 2 is an illustration of a flux optimization control for use with the synchronous generator control system illustrated in FIG. 1.

### DETAILED DESCRIPTION

An exemplary synchronous generator control system is described herein and is shown in the attached drawings. As aircraft design moves towards increasing quantity of electrical components and the resulting increase in electrical load, a system that can meet these high power demands while responding quickly to power generation needs is necessary. The present disclosure describes such a system. In addition, the present disclosure describes a method of regulating power in the presence of load variations, speed variations, and varied operating conditions. The synchronous generator control system controls flux levels used within field orientation control to minimize machine losses.

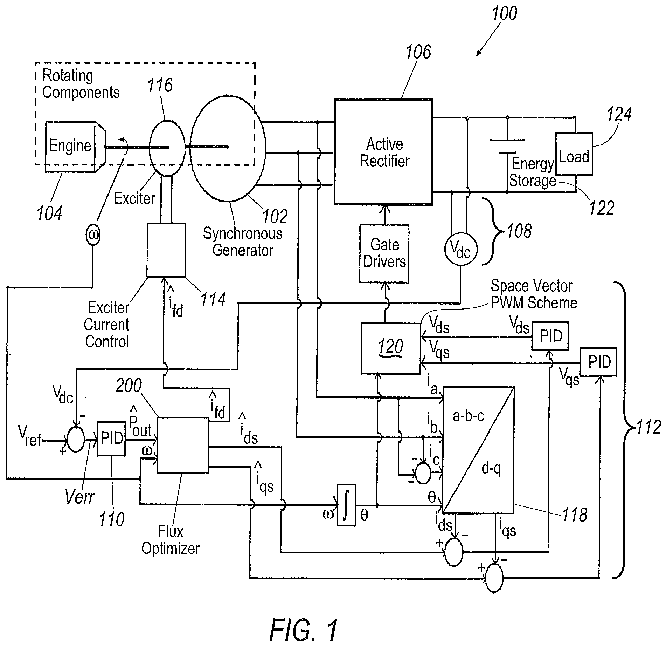

Figure 1 illustrates a synchronous generator control system 100 including a synchronous generator 102 driven by a power plant or engine 104. The power plant 104 may be an aircraft gas turbine. The synchronous generator 102 output is rectified using an active rectifier 106 to provide power to a DC bus 108. The DC bus voltage error Vₑᵣᵣ is the difference between the bus voltage V_{dc} and the desired bus voltage V_{ref}. The DC bus voltage error Vₑᵣᵣ is utilized as an input into a PID controller 110. The PID controller 110 provides a desired output power value Pₒᵤₜ, which the synchronous generator 102 should produce to maintain the bus voltage. The desired output power value Pₒᵤₜ (or alternately the desired output torque value Tₒᵤₜ) as well as the measured speed ω are inputs into the flux optimization control 200 that will be described in greater detail below. The outputs of the flux optimization control 200 include desired stator current i_{qs}, i_{ds} and desired field current magnitude i_{fd}. These outputs are sent to an inner loop current controller 112 as well as a field excitation controller 114. The inner loop current controller 112 provides switching laws for the active rectifier 106 causing the machine stator currents to track the desired currents. The field excitation controller 114 controls the exciter 116 to ensure the desired field current i_{fd} is achieved in the field winding.

The generator control system 100 may also include a variety of additional components and controls such as, but not limited to, an algebraic transform control 118 for conversion between the a-b-c frame and the q-d frame, some form of PWM scheme 120 such as space vector modulation, an energy storage 122 and an energy load 124. It is contemplated that the energy load 124 may encompass any or all of the electrical needs of an aircraft or other system. It would be understood that the overall scheme could be modified and adapted by one skilled in the art in light of the present disclosure. It is contemplated that the flux optimization control 200 could be implemented in a variety of varied layouts and control schemes.

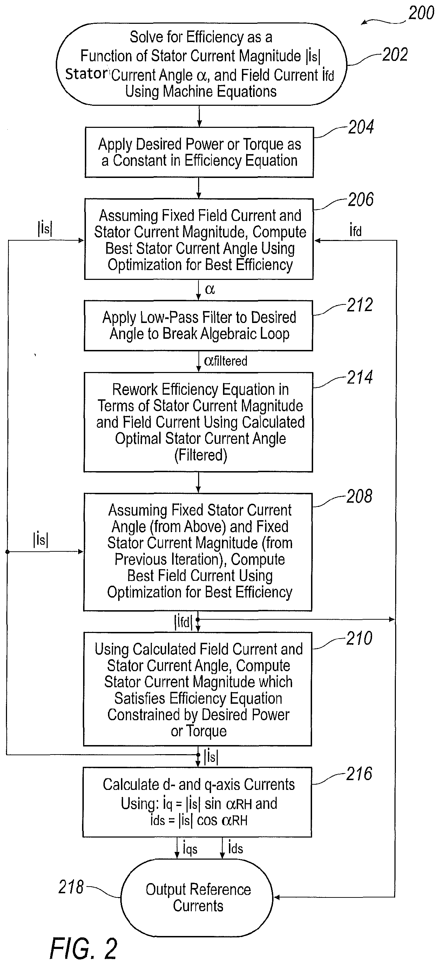

Figure 2 illustrates the flux optimization control 200 in accordance with the present disclosure. The flux optimization control 200 begins by performing a first machine efficiency equation 202 which solves for efficiency as a function of the stator current magnitude iₛ, the stator current angle α, and the field current magnitude i_{fd} and outputs a fixed stator current magnitude |iₛ|, a fixed stator current angle |α| and a fixed field current magnitude |i_{fd}|. A constraint equation 204 is then performed utilizing either the desired power or torque (Pₒᵤₜ or Tₒᵤₜ) as a constraint in the efficiency equation. A first parametric optimization 206 is then executed assuming a fixed stator current magnitude |iₛ| and a fixed field current magnitude |i_{fd}| in order to calculate a desired stator current angle α for efficiency. A second parametric optimization 208 is executed assuming a fixed stator current magnitude |iₛ| and a fixed stator current angle |α| in order to calculate a desired field current magnitude i_{fd}. The calculated desired field current magnitude i_{fd} is looped back to the first parametric optimization 206 for use as the fixed field current magnitude |i_{fd}|. In addition, the calculated desired field current magnitude i_{fd} along with the desired stator current angle α are passed to an algebraic machine equation 210 where they are used to calculate a desired stator current magnitude iₛ. The desired stator current magnitude iₛ is looped back to the first parametric optimization 206 for use as the fixed stator current magnitude |iₛ|. In this fashion, the first parametric optimization 206 and the second parametric optimization 208 operate in a looped arrangement.

In order to resolve this algebraic loop, the disclosure contemplates the use of an algebraic loop breaking step 212 positioned after the first parametric optimization 206. The algebraic loop breaking step 212 is contemplated to embody any mathematical arrangement that will act to resolve the loop quickly. The algebraic loop breaking step may comprise a stable low-pass filter. The algebraic loop breaking step 212 produces a filtered desired stator current angle α_{filtered}. In addition, the control 200 may also include a second efficiency equation step 214 prior to the second parametric optimization 208. The second efficiency equation 214 solves efficiency in terms of stator current magnitude |iₛ| and stator current angle α. The second efficiency equation 214, within the looped arrangement, further improves the flux optimization response time.

The looped portions of the control 200 continually produces a desired stator current magnitude |iₛ|, a desired stator current angle α, and a desired field current magnitude i_{fd}. The desired stator current magnitude iₛ and the desired stator current angle α are utilized in calculation step 216 to calculate stator i_{qs} and i_{ds} values which along with the desired field current magnitude i_{fd} are continually output in an output step 218 to the inner loop current controller 112 as well as the field excitation controller 114. The dual looped optimization ensures that the voltage quickly reaches and maintains proper bus voltage while minimizing the copper resistive losses of the synchronous generator 102. It will be understood that one skilled in the art would recognize a variety of alterations or modifications in light of the present disclosure.

It will be appreciated that the aforementioned method and devices may be modified to have some components and steps removed, or may have additional components and steps added, within the scope of the claims. Even though the present disclosure has been described in detail with reference to specific embodiments, it will be appreciated that the various modifications and changes can be made to these embodiments without departing from the scope of the present disclosure as set forth in the claims. Within the scope of the claims, the specification and the drawings are to be regarded as an illustrative thought instead of merely restrictive thought.

## Claims

1. A control method for a synchronous generator system (100) comprising the steps of:
performing a first optimization (206) to determine determining a first stator current angle (α) that minimizes a DC bus voltage error (Vₑᵣᵣ) assuming fixed stator current magnitude (|iₛ|) and fixed field current magnitude (|i_{fd}|);
performing a second parametric optimization (208) to determine a first field current magnitude (i_{fd}) that minimizes the DC bus voltage error (Vₑᵣᵣ) assuming fixed stator current magnitude (|iₛ|) and fixed stator current angle (|α|);
calculating a first stator current magnitude (iₛ) using a first stator current angle (α) and a first field current magnitude (i_{fd}); and
outputting the first stator current magnitude (iₛ), the first stator current angle (α) and the first field current magnitude (i_{fd}).

2. A control method for a synchronous generator system (100) as claimed in claim 1, wherein the first optimization (206) and the second optimization (208) are in a looped arrangement.

3. A control method for a synchronous generator system (100) as claimed in claims 1 or 2, further comprising:
performing a first machine efficiency equation (202) prior to the first optimization (206) to determine the fixed stator current magnitude (|iₛ|), the fixed stator current angle (|α|) and the fixed field current magnitude (|i_{fd}|); and
performing a constraint equation (204) using one of a required output power value (Pₒᵤₜ) or a required output torque value (Tₒᵤₜ) as a constraint.

4. A control method for a synchronous generator system (100) as claimed in claim 3, wherein the constraint comprises the required output power value (Pₒᵤₜ).

5. A control method for a synchronous generator system (100) as claimed in claim 3, wherein the constraint comprises the required output torque value (Tₒᵤₜ).

6. A control method for a synchronous generator system (100) as claimed in any one of claims 3, 4 or 5, further comprising:
performing a second machine efficiency equation (214) using the first stator current magnitude (iₛ) and the first stator current angle (α) to verify the first machine efficiency equation (202).

7. A control method for a synchronous generator system (100) as claimed in any of the preceding claims, further comprising:
performing an algebraic loop breaking step (212) to resolve the first optimization (206) and optionally the second optimization (208).

8. A control method for a synchronous generator system (100) as claimed in claim 6, wherein the algebraic loop breaking step (212) comprises a low-pass filter.

9. A control method for a synchronous generator system (100) as claimed in any of the preceding claims, further comprising:
converting the first stator current magnitude (iₛ) and the first stator current angle (α) to a q-axis current value and a d-axis current value.

10. A synchronous generator control system (100) comprising:
a synchronous generator (102);
an active rectifier (106) in communication with the synchronous generator (102);
an exciter current control in communication with the synchronous generator (102); and
a flux optimizer controller (200) in communication with the exciter current control, the flux optimizer controller (200) configured to:
perform a first optimization (206) to determine a first stator current angle (α) that minimizes a DC bus voltage error (Vₑᵣᵣ) assuming fixed stator current magnitude (|iₛ|) and fixed field current magnitude (|i_{fd}|);
perform a second optimization (208) to determine a first field current magnitude (i_{fd}) that minimizes a DC bus voltage error (Vₑᵣᵣ) assuming fixed stator current magnitude (|iₛ|) and fixed stator current angle (|α|);
calculate a first stator current magnitude (iₛ) using the first stator current angle (α) and the first field current magnitude (i_{fd}); and
output the first stator current magnitude (iₛ), the first stator current angle (α) and the first field current magnitude (i_{fd}).

11. A synchronous generator control system (100) as claimed in claim 10, wherein the flux optimizer controller (200) is further configured to:
loop the first optimization (206) and the second optimization (208).

12. A synchronous generator control system (100) as claimed in any one of claims 10 or 11, wherein the flux optimizer controller (200) is further configured to:
perform an algebraic loop breaking step (212) to resolve the first optimization (206) and optionally the second optimization (208).

13. A synchronous generator control system (100) as claimed in claim 12, further comprising:
a low-pass filter configured to perform the algebraic loop breaking step (212).

14. A synchronous generator control system (100) as claimed in any one of claims 10 to 13, wherein the flux optimizer controller (200) is further configured to:
perform a first machine efficiency equation (202) prior to the first optimization (206) to determine the fixed stator current magnitude (|iₛ|), the fixed stator current angle (|α|) and the fixed field current magnitude (|i_{fd}|); and
perform a constraint equation (204) using one of a required output power value (Pₒᵤₜ) or a required output torque value (Tₒᵤₜ) as a constraint.

15. A synchronous generator control system as claimed in claim 14, wherein the flux optimizer controller is further configured to:
perform a second machine efficiency equation (214) using the first stator current magnitude (iₛ) and the first stator current angle (α) to verify the first machine efficiency equation (202).

## Patentansprüche

1. Steuerverfahren für ein Synchrongeneratorsystem (100), umfassend die Schritte:
Durchführen einer ersten Optimierung (206), um ein Bestimmen eines ersten Statorstromwinkels (a) zu bestimmen, der einen Zwischenkreisspannungsfehler (Vₑᵣᵣ) unter Annahme einer festen Statorstromgröße (|iₛ|) und einer festen Feldstromgröße (|i_{fd}|) minimiert;
Durchführen einer zweiten parametrischen Optimierung (208), um eine erste Feldstromgröße (ifd) zu bestimmen, die den Zwischenkreisspannungsfehler (Vₑᵣᵣ) unter Annahme einer festen Statorstromgröße (|iₛ|) und eines festen Statorstromwinkels (|α|) minimiert;
Berechnen einer ersten Statorstromgröße (iₛ) unter Verwendung eines ersten Statorstromwinkels (a) und einer ersten Feldstromgröße (ifd); und
Ausgeben der ersten Statorstromgröße (iₛ), des ersten Statorstromwinkels (a) und der ersten Feldstromgröße (ifd).

2. Steuerverfahren für ein Synchrongeneratorsystem (100) nach Anspruch 1, wobei die erste Optimierung (206) und die zweite Optimierung (208) in einer schleifenförmigen Anordnung vorliegen.

3. Steuerverfahren für ein Synchrongeneratorsystem (100) nach Anspruch 1 oder 2, ferner umfassend:
Durchführen einer ersten Maschineneffizienzgleichung (202) vor der ersten Optimierung (206), um die feste Statorstromgröße (|iₛ|), den festen Statorstromwinkel (|α|) und die feste Feldstromgröße (|i_{fd}|) zu bestimmen; und
Durchführen einer Beschränkungsgleichung (204) unter Verwendung eines von einem erforderlichen Ausgangsleistungswert (Pₒᵤₜ) oder einem erforderlichen Ausgangsdrehmomentwert (Tₒᵤₜ) als Beschränkung.

4. Steuerverfahren für ein Synchrongeneratorsystem (100) nach Anspruch 3, wobei die Beschränkung den erforderlichen Ausgangsleistungswert (Pₒᵤₜ) umfasst.

5. Steuerverfahren für ein Synchrongeneratorsystem (100) nach Anspruch 3, wobei die Beschränkung den erforderlichen Ausgangsdrehmomentwert (Tₒᵤₜ) umfasst.

6. Steuerverfahren für ein Synchrongeneratorsystem (100) nach einem der Ansprüche 3, 4 oder 5, ferner umfassend:
Durchführen einer zweiten Maschineneffizienzgleichung (214) unter Verwendung der ersten Statorstromgröße (iₛ) und des ersten Statorstromwinkels (a), um die erste Maschineneffizienzgleichung (202) zu verifizieren.

7. Steuerverfahren für ein Synchrongeneratorsystem (100), nach einem der vorhergehenden Ansprüche, ferner umfassend:
Durchführen eines algebraischen Schleifenunterbrechungsschritts (212), um die erste Optimierung (206) und optional die zweite Optimierung (208) aufzulösen.

8. Steuerverfahren für ein Synchrongeneratorsystem (100) nach Anspruch 6, wobei der algebraische Schleifenunterbrechungsschritt (212) ein Tiefpassfilter umfasst.

9. Steuerverfahren für ein Synchrongeneratorsystem (100), nach einem der vorhergehenden Ansprüche, ferner umfassend:
Konvertieren der ersten Statorstromgröße (iₛ) und des ersten Statorstromwinkels (a) in einen q-Achsen-Stromwert und einen d-Achsen-Stromwert.

10. Synchrongeneratorsteuersystem (100), umfassend: einen Synchrongenerator (102);
einen aktiven Gleichrichter (106) in Verbindung mit dem Synchrongenerator (102); eine Erregerstromregelung in Verbindung mit dem Synchrongenerator (102); und
eine Flussoptimierungssteuerung (200) in Verbindung mit der Erregerstromsteuerung, wobei die Flussoptimierungssteuerung (200) konfiguriert ist, um:
eine erste Optimierung (206) durchzuführen, um einen ersten Statorstromwinkel (a) zu bestimmen, der einen Zwischenkreisspannungsfehler (Vₑᵣᵣ) unter Annahme einer festen Statorstromgröße (|iₛ|) und einer festen Feldstromgröße (|i_{fd}|) minimiert;
eine zweite Optimierung (208) durchzuführen, um eine erste Feldstromgröße (ifd) zu bestimmen, die einen Zwischenkreisspannungsfehler (Vₑᵣᵣ) unter Annahme einer festen Statorstromgröße (|iₛ|) und eines festen Statorstromwinkels (|α|) minimiert;
eine erste Statorstromgröße (iₛ) unter Verwendung des ersten Statorstromwinkels (a) und der ersten Feldstromgröße (ifd) zu berechnen; und
die erste Statorstromgröße (iₛ), den ersten Statorstromwinkel (a) und die erste Feldstromgröße (ifd) auszugeben.

11. Synchrongeneratorsteuersystem (100) nach Anspruch 10, wobei die Flussoptimierungssteuerung (200) ferner konfiguriert ist, um:
die erste Optimierung (206) und die zweite Optimierung (208) in einer Schleife auszuführen.

12. Synchrongeneratorsteuersystem (100) nach einem der Ansprüche 10 oder 11, wobei die Flussoptimierungssteuerung (200) ferner konfiguriert ist, um:
einen algebraischen Schleifenunterbrechungsschritt (212) durchzuführen, um die erste Optimierung (206) und optional die zweite Optimierung (208) aufzulösen.

13. Synchrongeneratorsteuersystem (100) nach Anspruch 12, ferner umfassend:
ein Tiefpassfilter, das konfiguriert ist, um den algebraischen Schleifenunterbrechungsschritt (212) durchzuführen.

14. Synchrongeneratorsteuersystem (100) nach einem der Ansprüche 10 bis 13, wobei die Flussoptimierungssteuerung (200) ferner konfiguriert ist, um:
vor der ersten Optimierung (206) eine erste Maschineneffizienzgleichung (202) durchzuführen, um die feste Statorstromgröße (|iₛ|), den festen Statorstromwinkel (|α|) und die feste Feldstromgröße (|i_{fd}|) zu bestimmen; und
eine Einschränkungsgleichung (204) unter Verwendung eines von einem erforderlichen Ausgangsleistungswert (Pₒᵤₜ) oder einem erforderlichen Ausgangsdrehmomentwert (Tₒᵤₜ) als Einschränkung durchzuführen.

15. Synchrongeneratorsteuersystem nach Anspruch 14, wobei die Flussoptimierungssteuerung ferner konfiguriert ist, um:
eine zweite Maschineneffizienzgleichung (214) unter Verwendung der ersten Statorstromgröße (iₛ) und des ersten Statorstromwinkels (a) durchzuführen, um die erste Maschineneffizienzgleichung (202) zu verifizieren.

## Revendications

1. Procédé de commande pour un système générateur synchrone (100) comprenant les étapes de :
exécution d'une première optimisation (206) pour déterminer la détermination d'un premier angle de courant statorique (a) qui minimise une erreur de tension de bus CC (Vₑᵣᵣ) en supposant une magnitude de courant statorique fixe (|iₛ|) et une magnitude de courant de champ fixe (|i_{fd}|) ;
l'exécution d'une deuxième optimisation paramétrique (208) pour déterminer une première magnitude de courant de champ (ifd) qui minimise l'erreur de tension de bus CC (Vₑᵣᵣ) en supposant une magnitude de courant statorique fixe (|iₛ|) et un angle de courant statorique fixe (|α|) ;
le calcul d'une première magnitude de courant statorique (iₛ) en utilisant un premier angle de courant statorique (a) et une première magnitude de courant de champ (ifd) ; et
la sortie de la première magnitude de courant statorique (iₛ), du premier angle de courant statorique (a) et de la première magnitude de courant de champ (ifd).

2. Procédé de commande pour un système générateur synchrone (100) selon la revendication 1, dans lequel la première optimisation (206) et la deuxième optimisation (208) sont dans une disposition en boucle.

3. Procédé de commande pour un système générateur synchrone (100) selon les revendications 1 ou 2, comprenant en outre :
l'exécution d'une première équation d'efficacité de machine (202) avant la première optimisation (206) pour déterminer la magnitude de courant statorique fixe (|iₛ|), l'angle de courant statorique fixe (|α|) et la magnitude de courant de champ fixe (|i_{fd}|) ; et
l'exécution d'une équation de contrainte (204) en utilisant l'une d'une valeur de puissance de sortie requise (Pₒᵤₜ) ou d'une valeur de couple de sortie requise (Tₒᵤₜ) comme contrainte.

4. Procédé de commande pour un système générateur synchrone (100) selon la revendication 3, dans lequel la contrainte comprend la valeur de puissance de sortie requise (Pₒᵤₜ).

5. Procédé de commande pour un système générateur synchrone (100) selon la revendication 3, dans lequel la contrainte comprend la valeur de couple de sortie requise (Tₒᵤₜ).

6. Procédé de commande pour un système générateur synchrone (100) selon l'une quelconque des revendications 3, 4 ou 5, comprenant en outre :
l'exécution d'une deuxième équation d'efficacité de machine (214) en utilisant la première magnitude de courant statorique (iₛ) et le premier angle de courant statorique (a) pour vérifier la première équation d'efficacité de machine (202).

7. Procédé de commande pour un système générateur synchrone (100) selon l'une quelconque des revendications précédentes, comprenant en outre :
l'exécution d'une étape de rupture de boucle algébrique (212) pour résoudre la première optimisation (206) et éventuellement la deuxième optimisation (208).

8. Procédé de commande pour un système générateur synchrone (100) selon la revendication 6, dans lequel l'étape de rupture de boucle algébrique (212) comprend un filtre passe-bas.

9. Procédé de commande pour un système générateur synchrone (100) selon l'une quelconque des revendications précédentes, comprenant en outre :
la conversion de la première magnitude de courant statorique (iₛ) et du premier angle de courant statorique (a) en une valeur de courant d'axe q et une valeur de courant d'axe d.

10. Système de commande de générateur synchrone (100) comprenant :
un générateur synchrone (102) ;
un redresseur actif (106) en communication avec le générateur synchrone (102) ; une commande de courant d'excitation en communication avec le générateur synchrone (102) ; et
un contrôleur d'optimiseur de flux (200) en communication avec la commande de courant d'excitation, le contrôleur d'optimiseur de flux (200) étant configuré pour :
exécuter une première optimisation (206) pour déterminer un premier angle de courant statorique (a) qui minimise une erreur de tension de bus CC (Vₑᵣᵣ) en supposant une magnitude de courant statorique fixe (|iₛ|) et une magnitude de courant de champ fixe (|i_{fd}|) ;
exécuter une deuxième optimisation (208) pour déterminer une première magnitude de courant de champ (ifd) qui minimise une erreur de tension de bus CC (Vₑᵣᵣ) en supposant une magnitude de courant statorique fixe (|iₛ|) et un angle de courant statorique fixe (|α|) ;
calculer une première magnitude de courant statorique (iₛ) en utilisant le premier angle de courant statorique (a) et la première magnitude de courant de champ (ifd) ; et
fournir en sortie la première magnitude de courant statorique (iₛ), le premier angle de courant statorique (a) et la première magnitude de courant de champ (ifd).

11. Système de commande de générateur synchrone (100) selon la revendication 10, dans lequel le contrôleur d'optimiseur de flux (200) est en outre configuré pour :
boucler la première optimisation (206) et la deuxième optimisation (208).

12. Système de commande de générateur synchrone (100) selon l'une quelconque des revendications 10 ou 11, dans lequel le contrôleur d'optimiseur de flux (200) est en outre configuré pour :
exécuter une étape de rupture de boucle algébrique (212) pour résoudre la première optimisation (206) et éventuellement la deuxième optimisation (208).

13. Système de commande de générateur synchrone (100) selon la revendication 12, comprenant en outre :
un filtre passe-bas configuré pour exécuter l'étape de rupture de boucle algébrique (212).

14. Système de commande de générateur synchrone (100) selon l'une quelconque des revendications 10 à 13, dans lequel le contrôleur d'optimiseur de flux (200) est en outre configuré pour :
exécuter une première équation d'efficacité de machine (202) avant la première optimisation (206) pour déterminer la magnitude de courant statorique fixe (|iₛ|), l'angle de courant statorique fixe (|α|) et la magnitude de courant de champ fixe (|i_{fd}|) ; et
exécuter une équation de contrainte (204) en utilisant une valeur de puissance de sortie requise (Pₒᵤₜ) ou une valeur de couple de sortie requise (Tₒᵤₜ) comme contrainte.

15. Système de commande de générateur synchrone selon la revendication 14, dans lequel le contrôleur d'optimiseur de flux est en outre configuré pour :
exécuter une deuxième équation d'efficacité de machine (214) en utilisant la première magnitude de courant statorique (iₛ) et le premier angle de courant statorique (a) pour vérifier la première équation d'efficacité de machine (202).
